# EUROPEAN PATENT APPLICATION

(11) **EP 4 563 544 A1**
(43) Date of publication of application: **04.06.2025**
(21) Application number: 23860127.2
(22) Date of filing: 22.08.2023
(51) Int. Cl.: C04B 22/14, C04B 22/06, C04B 22/10, C04B 24/04, C04B 28/02, C04B 40/02

(54) **HARDENING ACCELERATOR FOR HYDRAULIC MATERIALS, CEMENT COMPOSITION AND HARDENED BODY**

(30) Priority: 30.08.2022 JP 2022136664
(71) Applicant: Denka Company Limited, Tokyo 103-8338 (JP)
(72) Inventor: TANAKADATE, Yuto, Tokyo 103-8338 (JP); MAEDA, Takumi, Tokyo 103-8338 (JP)
(74) Representative: Müller-Boré & Partner Patentanwälte PartG mbB
(86) International application number: PCT/JP2023/030136
(87) International publication number: WO 2024/048364

(57) **Abstract**

Provided is a hardening accelerator for hydraulic materials containing 1 to 65 % by mass of calcium sulfoaluminate, 0.5 to 75 % by mass of organic acid calcium salt, 1 to 55 % by mass of inorganic calcium compound, and 0.5 to 45 % by mass of an inorganic sulfate excluding calcium sulfate.

## Description

### Technical Field

The present invention relates to a hardening accelerator for hydraulic materials, a cement composition containing the materials, and a hardened body.

### Background Art

Hydraulic materials such as cement used in civil engineering and construction fields typically harden by being mixed with water and left to stand for a predetermined period. The hardening rate of hydraulic materials can be influenced by the ratio of materials and water, the surrounding ambient temperature, and the curing method, but by using an admixture that promotes hardening, namely, a hardening accelerator, the time required for the hydraulic material to harden can be shortened.

Shortening the time required for hydraulic materials to harden leads to improved productivity at a worksite. For example, concrete hardened bodies used in the precast method for reinforced concrete buildings and the like, can generally be obtained by pouring the cement composition into formwork, allowing it to leave for a predetermined period, and then further curing it by steam curing and the like to obtain the hardened bodies. However, by using a hardening accelerator, the time required to reach the initial strength necessary for demolding can be shortened, allowing the hardened bodies to be produced efficiently.

In addition, after pouring the cement composition, "compaction" is usually performed using a vibrator or the like to distribute the cement composition evenly within the formwork. However, when the fluidity of the cement composition immediately after pouring decreases, the compaction requires a lot of effort and time, resulting in reduced productivity.

Regarding hardening accelerators, for example, Patent Literature 1 discloses a hardening accelerator for hydraulic materials that contains predetermined amounts of inorganic sulfate, calcium sulfoaluminate, and inorganic hydroxide. Patent Literature 2 discloses a cement admixture containing calcium sulfoaluminate having a Blaine specific surface area value of 4000 cm²/g or more, and one or two or more types selected from the group consisting of formates, and lactates.

### Citation List

### Patent Literature

PTL 1:JP 2014-19618 A
PTL 2:JP 2010-235399 A

### Summary of Invention

### Technical Problem

However, hydraulic materials using hardening accelerators as described above lose fluidity immediately after being kneaded with water, and thus require effort and time for compaction after pouring, which leads to concerns about reduced productivity.

Based on the above, the present invention is to provide a hardening accelerator for hydraulic materials that can improve the fluidity retention and the initial strength development in hydraulic materials.

### Solution to Problem

As a result of intensive study to solve the above-described problems, the inventors found that a hardening accelerator for hydraulic materials containing calcium sulfoaluminate, organic acid calcium salt, inorganic calcium compounds, and inorganic sulfate salts excluding calcium sulfate in predetermined ratios could solve the problems, and achieved the present invention. That is, the present invention is as follows.

[1] A hardening accelerator for hydraulic materials containing 1 to 65 % by mass of calcium sulfoaluminate, 0.5 to 75 % by mass of organic acid calcium salt, 1 to 55 % by mass of inorganic calcium compound, and 0.5 to 45 % by mass of an inorganic sulfate excluding calcium sulfate.
[2] The hardening accelerator for hydraulic materials according to the above item [1], in which the inorganic calcium compound is one or more selected from the group consisting of calcium sulfate, calcium hydroxide, calcium carbonate and calcium oxide.
[3] The hardening accelerator for hydraulic materials according to the above item [1] or [2], in which the inorganic sulfate is one or more selected from the group consisting of sulfates, thiosulfates, sulfites, bisulfites, pyrosulfates, and pyrobisulfites.
[4] A cement composition containing the hardening accelerator for hydraulic materials according to any one of the above items [1] to [3]; and a cement.
[5] The cement composition according to the above item [4], in which a content of the hardening accelerator for hydraulic materials is 0.5 to 10 % by mass.
[6] The cement composition according to the above item [4] or [5], which is a concrete containing an aggregate.
[7] A hardened body obtained by hardening the cement composition according to the above item [4] or [5].
[8] A hardened body obtained by hardening the cement composition according to the above item [6].
[9] A method for producing a hardened body containing: hardening a cement composition containing the hardening accelerator for hydraulic materials according to any one of the above items [1] to [3], a cement and water, by steam curing at a maximum temperature of 40 to 80 °C for 2 to 8 hours.

### Advantageous Effects of Invention

According to the present invention, a hardening accelerator for hydraulic materials that can improve the fluidity retention and the initial strength development in hydraulic materials can be provided.

### Description of Embodiments

Hereinafter, one embodiment of the present invention (the present embodiment) will be described in detail, but the present invention is not limited to this embodiment. In the present invention, the term "hydraulic materials" refers to materials that harden by being kneaded with water, and "hardened body" refers to substances such as cement paste, mortar, and concrete that hardened. In this description, "%" and "parts" are based on mass unless otherwise specified.

### [Hardening accelerator for hydraulic materials]

A hardening accelerator for hydraulic materials of the present invention contains 1 to 65 % by mass of calcium sulfoaluminate, 0.5 to 75 % by mass of organic acid calcium salt, 1 to 55 % by mass of inorganic calcium compound, and 0.5 to 45 % by mass of an inorganic sulfate excluding calcium sulfate. The hydraulic hardening accelerator for hydraulic materials not only promotes the hardening of hydraulic materials when they are kneaded with water, but in some cases, the accelerator for hydraulic materials itself may also harden while facilitating the hardening.

### (Calcium sulfoaluminate)

In the present invention, calcium sulfoaluminate is a general term for hydraulic substances and hydrated salts represented by the chemical formula xCaO·yAl₂O₃·zCaSO₄·mH₂O (where x, y, and z are positive real numbers other than 0, and m is 0 or a positive real number). Examples thereof include Auin (3CaO·3Al₂O₃·CaSO₄), the AFt phase represented by ettringite (3CaO·Al₂O₃·3CaSO₄·32H₂O), the AFm phase represented by monosulfate (3CaO·Al₂O₃·CaSO₄·12H₂O), and those in which the AFt phase and the AFm phase coexist. The calcium sulfoaluminate may be amorphous. In addition, a part of Al₂O₃ may be replaced with a small amount of Fe₂O₃ or SiO₂, etc., and a part of CaSO₄ may be replaced with Ca(OH)₂ or CaCO₃, etc. In the present invention, z cannot be set to 0 in the above chemical formula xCaO·yAl₂O₃·zCaSO₄·mH₂O, since the fluidity of the hydraulic material cannot be maintained and there is a risk of a decrease in strength during hardening due to a phase transition.

Calcium sulfoaluminate can be produced by blending calcia raw material such as lime, sulfate raw material such as gypsum, and alumina raw material such as bauxite (aluminum hydroxide), as raw materials, in a predetermined ratio, for example, a molar ratio of CaO:CaSO₄:Al₂O₃ of 3:3: 1, firing the mixture at about 1,500°C using a kiln or the like, and pulverizing the mixture. Additionally, it is acceptable to add silicon dioxide, etc., to the once-fired material, perform heat treatment, and pulverize it.

The hardening accelerator for hydraulic materials of the present invention contains calcium sulfoaluminate in an amount of 1 to 65 % by mass, preferably 5 to 60 % by mass, more preferably 10 to 55 % by mass, and further preferably 20 to 45 % by mass. When the content ratio of calcium sulfoaluminate is outside the range of 1 to 65 % by mass, the hydraulic material may not be able to improve fluidity retention and initial strength development.

The Blaine specific surface area value (hereinafter simply referred to as the "Blaine value") of calcium sulfoaluminate is preferably 1,000 to 6,000 cm²/g, more preferably 2,000 to 4,000 cm²/g, and even more preferably 2,200 to 3,800 cm²/g.

In the present invention, the Blaine specific surface area value is measured in accordance with the specific surface area test described in JIS R 5201:2015 "Physical testing methods for cement".

### (Organic acid calcium salt)

The hardening accelerator for hydraulic materials of the present invention contains organic acid calcium salt in an amount of 0.5 to 75 % by mass, preferably 1 to 70 % by mass, more preferably 5 to 55 % by mass, and further preferably 15 to 45 % by mass. When the content ratio of organic acid calcium salt is less than 0.5 % by mass, there is a risk that the fluidity retention and initial strength development of the hydraulic material cannot be improved, and when the content exceeds 75 % by mass, there is a risk that the initial strength development cannot be improved.

In the present embodiment, as the organic acid calcium salt, for example, calcium formate, calcium acetate and calcium lactate etc., can be used, and only one or two or more of these can be used. When two or more organic acid calcium salts are used, the total of their respective content ratio is considered as the content ratio of the organic acid calcium salts. In the present embodiment, from the viewpoint of initial strength development, calcium formate and/or calcium acetate is preferably used, and calcium formate is more preferably used.

### (Inorganic calcium compound)

The hardening accelerator for hydraulic materials of the present invention contains inorganic calcium compound in an amount of 1 to 55 % by mass, preferably 5 to 50 % by mass, more preferably 15 to 40 % by mass, and further preferably 18 to 30 % by mass. When the content ratio of inorganic calcium compound is less than 1 % by mass, there is a risk that the fluidity retention of the hydraulic materials cannot be improved, and when the content exceeds 55 % by mass, there is a risk that the fluidity retention and the initial strength development of the hydraulic materials cannot be improved.

In the present embodiment, the inorganic calcium compound is preferably one or more selected from the group consisting of calcium sulfate, calcium hydroxide, calcium carbonate and calcium oxide. When two or more inorganic calcium compounds are used, the total of their respective content ratio is considered as the content ratio of the inorganic calcium compound. In the present embodiment, from the viewpoint of initial strength development, calcium sulfate and/or calcium hydroxide is preferred, calcium sulfate is more preferred, and anhydrous calcium sulfate is further preferred.

### (Inorganic sulfate)

The hardening accelerator for hydraulic materials of the present invention contains inorganic sulfate excluding calcium sulfate in an amount of 0.5 to 45 % by mass, preferably 1 to 40 % by mass, more preferably 2.5 to 30 % by mass, and further preferably 3 to 25 % by mass. When the content ratio of inorganic sulfate excluding calcium sulfate is outside the range of 0.5 to 45 % by mass, the hydraulic material may not be able to improve fluidity retention and initial strength development.

In the present embodiment, the inorganic sulfate is preferably one or more selected from the group consisting of sulfates, thiosulfates, sulfites, bisulfites, pyrosulfates, and pyrobisulfites. When two or more inorganic sulfates are used, the total of their respective content ratio is considered as the proportion of the inorganic sulfate. As inorganic substances which form salts, alkali metals and alkaline earth metals are preferred. In the present embodiment, from the viewpoint of initial strength development, a sulfate and/or a thiosulfate is preferably used, sodium sulfate, aluminum sulfate, sodium thiosulfate, and potassium alum are more preferable, sodium sulfate and aluminum sulfate are further preferable, and among them, sodium sulfate is further more preferable from the viewpoint of improving fluidity retention. When sodium sulfate is used, it is more preferred that it is anhydrous.

### [Cement composition]

A cement composition according to the present embodiment contains the hardening accelerator for hydraulic materials and a cement.

As the cement, there is no particular limitation, and examples thereof include various types of portland cement such as ordinary, rapid-hardening, ultra-rapid-hardening, low-heat, and moderate-heat; various blended cements made by mixing these Portland cements with blast furnace slag, fly ash, silica fume, etc.; environmentally friendly cements (eco-cement) manufactured using municipal waste incineration ash or sewage sludge incineration ash as raw materials; commercially available fine-particle cements; and white cement. It is also possible to use various types of cement in a finely powdered form. It is also possible to use those which are adjusted by increasing or decreasing the amount of components (such as gypsum) normally used in cement. Furthermore, a combination of two or more of these may also be used. From the viewpoint of enhancing initial strength development, it is preferable to select ordinary portland cement or rapid-hardening portland cement, but it becomes easier to enable early demolding of the hardened body, even when blast furnace cement or fly ash cement, which have low initial strength expression, is used.

That is, from the viewpoint of production costs and strength development, in the cement used in the present invention, the Blaine value is preferably 2,500 to 7,000 cm²/g, more preferably 2,750 to 6,000 cm²/g, and further preferably 3,000 to 4,500 cm²/g.

The content of the hardening accelerator for hydraulic materials in the cement composition is preferably 0.5 to 10 mass %, more preferably 1.0 to 9.0 mass %, and further preferably 2.5 to 8.0 mass %. When the content of the hardening accelerator for hydraulic materials in the cement composition is within the above range, the fluidity retention and initial strength development of the hydraulic materials can be improved.

The flow value before pouring the cement composition is preferably 160 to 230, more preferably 170 to 220, and further preferably 190 to 200. When the flow value of the cement composition is within the above range, pouring and compaction are easy to be performed, and workability is improved. Furthermore, the change rate of flow value (flow change rate) after 1 hour of kneading the cement composition is preferably less than 20%, more preferably less than 15%, and further preferably less than 10%. When the flow change rate of the cement composition is within the above range, even when pouring is performed 1 hour after kneading the cement composition, pouring and compaction can be easily carried out, improving workability.

In the present invention, the flow value is measured in accordance with the specific surface area test described in JIS R 5201:2015 "Physical testing methods for cement". The flow change rate can be obtained by calculating the value of (flow value 1 hour after kneading) / (flow value immediately after kneading) × 100 (%) and then subtracting it from 100%.

The cement composition preferably contains an aggregate. That is, the cement composition is preferably concrete containing an aggregate (fine aggregate and coarse aggregate). The aggregate to be used may be the same fine aggregate or coarse aggregate as that used in ordinary cement mortar or concrete. That is, river sand, river gravel, mountain sand, mountain gravel, crushed stone, crushed sand, limestone aggregate, lime sand, silica sand, colored sand, artificial aggregate, blast furnace slag aggregate, sea sand, sea gravel, artificial lightweight aggregate, heavy weight aggregate, etc. can be used, and combinations of these are also possible.

The content ratio of the aggregate is preferably 40 to 250 parts by mass, more preferably 50 to 230 parts by mass, and further preferably 60 to 200 parts by mass, relative to 100 parts by mass of cement in the cement composition. When the content ratio of the aggregate is within the above range, the fluidity retention and initial strength development of the hydraulic materials can be more improved.

The cement composition may contain an alkali metal carbonate. By containing an alkali metal carbonate in the cement composition, the fluidity retention and initial strength development are easily improved. Examples of the alkali metal carbonate include sodium carbonate, potassium carbonate, lithium carbonate, sodium hydrogen carbonate, potassium hydrogen carbonate, and lithium hydrogen carbonate, and combinations of these are also possible.

The content ratio of the alkali metal carbonate, relative to 100 parts by mass of cement in the cement composition, is preferably 1 to 6 parts by mass as solid content, and more preferably 2 to 5 parts by mass. When the content ratio of the alkali metal carbonate is within the above range, it is easy to improve the fluidity retention and initial strength development.

The cement composition may contain siliceous fine powder. By containing siliceous fine powder in the cement composition, it becomes easy to improve the fluidity retention and initial strength development. Examples of siliceous fine powder include latent hydraulic materials such as granulated blast-furnace slag fine powder, and pozzolanic materials such as fly ash or silica fume. Among these, silica fume is preferred. The type of silica fume is not limited, but from the viewpoint of fluidity, it is more preferable to use silica fume containing 10% or less of ZrO₂ as an impurity or acid silica fume. Acid silica fume refers to silica fume in which a supernatant liquid when 1 g of silica fume is added to 100 mL of pure water and stirred, produces a supernatant indicate acidity with a pH of 5.0 or below.

The fineness of the siliceous fine powder is not particularly limited, but typically, granulated blast-furnace slag fine powder and fly ash have a Blaine value in the range of 3,000 to 9,000 cm²/g, and silica fume has a BET specific surface area in the range of 20,000 to 300,000 cm²/g.

The content ratio of the siliceous fine powder is preferably 1 to 20 parts by mass, more preferably 2 to 15 parts by mass, and further preferably 3 to 12 parts by mass, relative to 100 parts by mass of cement in the cement composition. By making the content ratio of siliceous fine powder equal to or more than the above-described lower limit, the fluidity retention and initial strength development are easily improved. Furthermore, by making the content ratio of the siliceous fine powder equal to or less than the above upper limit, it becomes easier to improve the fluidity retention.

The cement composition may also include an anti-foaming agent, as long as it does not negatively impact the performance. Anti-foaming agent is used to suppress the amount of air that is entrained during mixing. The type of anti-foaming agent is not particularly limited, as long as it does not significantly negatively impact the strength characteristics of the hardened mortar, and both liquid and powdered forms can be used. Examples thereof include polyether-based anti-foaming agents, polyhydric alcohol-based anti-foaming agents such as esters of polyhydric alcohols and alkyl ethers, alkyl phosphate-based anti-foaming agent, and silicone-based anti-foaming agent.

The content ratio of the anti-foaming agent is preferably 0.002 to 0.5 parts by mass, more preferably 0.005 to 0.45 parts by mass, and further preferably 0.01 to 0.4 parts by mass, relative to 100 parts by mass of cement in the cement composition. When the content ratio of the anti-foaming agent is equal to or more than the above-described lower limit, it can sufficiently exhibit its anti-foaming effect, and when the content ratio of the anti-foaming agent is equal to or less than the above-described upper limit, it can improve fluidity retention.

For the cement composition, as long as they do not adversely affect performance, one or two or more of admixtures such as gas foaming substances, water-reducing agents, air-entraining agents, rust inhibitors, water-repellent agents, antibacterial agents, coloring agents, antifreeze agents, limestone fine powder, granulated blast-furnace slag fine powder, sewage sludge incineration ash or its molten slag, municipal waste incineration ash or its molten slag, and pulp sludge incineration ash; thickening agents; shrinkage-reducing agents; polymers; clay minerals such as bentonite and sepiolite; and anionic exchangers such as hydrotalcite, can be used as long as they do not substantially inhibit the objectives of the present invention.

### [Hardened body]

The hardened body according to the present embodiment is obtained by hardening a cement composition. The hardened body is usually produced by kneading a cement composition with water, whereby the cement, which is a hydraulic material, undergoes a hydration reaction and hardens. The amount of water to be mixed into the hardened body is not particularly limited, but is preferably 10 to 70 parts by mass, more preferably 14 to 65 parts by mass, and further preferably 16 to 60 parts by mass, relative to 100 parts by mass of the cement composition. When the amount of mixing water is within the above range, it is easy to improve the initial strength development of the hydraulic material.

The hardened body is obtained by kneading the cement composition with water and leaving it to harden. However, the hardened body can also be obtained more efficiently by filling (pouring) it into formwork after kneading, or by directly pouring, spraying, or applying it to the construction site.

The compressive strength of the hardened body depends on the type of cement used, but is preferably 10.5 to 15.0 N/mm², more preferably 11.0 to 14.0 N/mm², and further preferably 12.0 to 13.0 N/mm², 6 hours after pouring. It is preferable that the compressive strength at the material age of 7 days is 40.0 to 50.0 N/mm², more preferable that it is 41.0 to 48.0 N/mm², and further preferable that it is 42.0 to 46.0 N/mm².

In the present invention, the compressive strength is measured in accordance with the specific surface area test described in JIS R 5201:2015 "Physical testing methods for cement".

### [Method for producing hardened body]

The method for producing a hardened body according to the present embodiment is a method in which a cement composition containing a hardening accelerator for hydraulic materials, cement and water is filled (poured) into a formwork and hardened. The method for producing the hardened body preferably contains a kneading step in which a hardening accelerator for hydraulic materials, cement and water are kneaded, a pouring step in which a cement composition which is kneaded is filled into the formwork, and a curing step in which the cement composition filled in the formwork is cured, in this order.

The kneading method in the kneading step is not particularly limited, and each of the materials may be mixed at the time of application, or some or all of the materials may be mixed in advance. As mixing devices, any existing equipment such as a tilting drum mixer, an omni mixer, a Henschel mixer, a V-type mixer, a ProShear mixer, and a Nauta mixer, can be used.

The pouring method in the pouring step can be performed using a known method. The temperature of the cement composition when pouring is preferably 0 to 50°C, and more preferably 10 to 40°C. When the temperature of the cement composition during pouring is within the above range, it becomes easier to enable early demolding of the hardened body.

The method for producing the hardened body preferably further contains a compaction step after the pouring step. The compaction method may be any known method, but from the viewpoint of workability, it is preferable to use a vibrator. The cement composition containing the hardening accelerator for hydraulic materials of the present invention maintains good fluidity immediately before pouring, making it easy to perform compaction, allowing for even distribution of the cement composition within the formwork, and also enabling the removal of air bubbles that may have been mixed in during pouring or the like.

As a curing method used in the curing step, from the viewpoint of improving productivity, it is preferable to use steam curing using a curing chamber or a heating sheet or the like. Steam curing typically raises the temperature of the surrounding atmosphere of the target while maintaining a moderate humidity and keeping a constant temperature to perform curing. As conditions for steam curing, it is preferable to have a maximum temperature of 40 to 80°C and a curing time of 2 to 8 hours, more preferably a maximum temperature of 40 to 75°C and a curing time of 2.5 to 7.5 hours, and further preferably a maximum temperature of 45 to 60°C and a curing time of 3 to 7 hours. By maintaining the maximum temperature of the atmosphere surrounding the cement composition during steam curing within the above range and the curing time within the above range, it becomes easier to enable early demolding of the hardened body.

The relative humidity around the cement composition during steam curing is preferably 50% RH or higher, more preferably 75% RH or higher, and even more preferably 90% RH or higher. The upper limit is not limited, but it may be 100% RH. When the relative humidity of the cement composition during steam curing is within the above range, it becomes easier to enable early demolding of the hardened body.

It is preferable that the curing step contains a step of pre-curing. As the pre-curing conditions, it is preferable to maintain the temperature constant at 10 to 50° C for about 1 to 3 hours. By containing a pre-curing step in the curing step, the temperature inside the poured cement composition can be made uniform, making it easier to prevent thermal cracks due to the temperature difference between the inside and outside.

The curing step preferably contains a heating step. As the heating method, a known method can be used, and heating is preferably performed at a heating rate of 10 to 30 °C/hour, more preferably at a heating rate of 12 to 28 °C/hour, and further preferably at a heating rate of 15 to 25 °C/hour. When the heating rate in the heating step is within the above range, hardening can be promoted while preventing thermal cracking due to a sudden increase in temperature of the cement composition.

The curing step preferably contains a temperature maintaining step. As a method for maintaining the temperature, a known method can be used, and it is preferable that the temperature is maintained at a constant temperature in the range of 40 to 80 °C for 1 to 8 hours, more preferably in the range of 40 to 75 °C for 1 to 6 hours, and further preferably in the range of 45 to 65 °C for 2.5 to 5 hours. By maintaining a constant temperature within the above-described range during the temperature maintaining step, it becomes possible to uniformly harden the poured cement composition, and becomes easier to enable early demolding of the hardened body.

The method for producing the hardened body preferably further contains a natural cooling step after the curing step. In the natural cooling step, the hardened body obtained from the curing step is allowed to cool naturally in an ambient temperature atmosphere. The cooling time is not specifically limited, but as long as the hardened body can be cooled to a temperature that allows for easy demolding, around 0.5 to 2 hours should be sufficient. By containing a natural cooling step after the curing step, it is possible to prevent thermal cracks of the hardened body.

### Examples

Hereinafter, the present invention will be specifically described based on Experimental examples, but the present invention is not limited thereto.

### <Experimental Example 1>

Using the materials listed below, a mortar was prepared with a water-to-cement ratio of 45% and a cement-to-aggregate ratio of 1:2.5 (mass ratio). For the mortar obtained, a water-reducing agent was added at the ratio listed in Table 1, and the mixing amount of the hardening accelerator for hydraulic materials, as shown in Table 1, was kneaded to the mixture to prepare the cement composition. The flow value of the obtained cement composition was measured, and the flow change rate was calculated. The results are shown in Table 1.

After filling the prepared cement composition into a formwork of dimension 4 × 4 × 16 cm, steam curing was performed to obtain a hardened body. As the steam curing conditions, pre-curing was performed at 20°C for 1 hour, followed by a temperature increase at a rate of 20°C per hour for 1.5 hours, a temperature maintaining 50°C for 3 hours, and then natural cooling for 0.5 hours. The compressive strength of the obtained hardened body was measured. The results are included in Table 1.

The calcium sulfoaluminate used was prepared by mixing first-grade calcium carbonate, calcium sulfate dihydrate, and aluminum hydroxide in a molar ratio of CaO:CaSO₄:Al₂O₃ at 4:3:1. This mixture was then calcined at 1,400°C for 2 hours and left to cool to room temperature. The resulting material was ground until it reached a Blaine value of 3,500 cm²/g.

### (Materials used)

Cement: ordinary portland cement (commercially available product), Blaine value of 3,200 cm²/g, specific gravity of 3.15 g/cm³.
Water: tap water.
Aggregate : Fine aggregate, river sand sourced from the Himekawa River system in Niigata Prefecture.
Water-reducing agent: Polycarboxylic acid-based high-performance water-reducing agent, (commercially available product).
Calcium sulfoaluminate: Trial product, Blaine value of 3,500 cm²/g.
Calcium formate (Organic acid calcium salt): Reagent.
Calcium sulfate (Inorganic calcium compound): Reagent.
Sodium sulfate (Inorganic sulfate): Reagent.

### (Measurement items)

Flow change rate: In accordance with the method specified in JIS R 5201:2015 "Physical Testing Methods for Cement", the flow values of the cement composition were measured immediately after kneading and one hour after kneading, respectively. The flow values immediately after kneading were all about 200. Using each measured flow value, the flow change rate was calculated as follows: (Flow change rate)=1-(flow value 1 hour after kneading)/(immediately after kneading)×100.

Compressive strength: In accordance with the method specified in JIS R 5201:2015 "Physical testing methods for cement", the compressive strength of the hardened body at the material age of 6 hours after the end of steam curing (immediately after demolding) and at the material age of 7 days after the end of steam curing was measured.

**Table 1**

| No | Hardening accelerator for hydraulic materials | | | | |
|---|---|---|---|---|---|
| | Calcium sulfoaluminate (% by mass) | Calcium formate (% by mass) | Calcium sulfate (% by mass) | Sodium sulfate (% by mass) | Mixing amount (Parts by mass) |
| 1-1 | 0 | 0 | 0 | 0 | 0 |
| 1-2 | 35.0 | 35.0 | 25.0 | 5.0 | 5 |
| 1-3 | 5.0 | 70.0 | 20.0 | 5.0 | 5 |
| 1-4 | 60.0 | 10.0 | 25.0 | 5.0 | 5 |
| 1-5 | 60.0 | 1.0 | 34.0 | 5.0 | 5 |
| 1-6 | 25.0 | 24.0 | 50.0 | 1.0 | 5 |
| 1-7 | 30.0 | 30.0 | 20.0 | 20.0 | 5 |
| 1-8 | 30.0 | 25.0 | 5.0 | 40.0 | 5 |
| 1-9 | 0 | 40.0 | 40.0 | 20.0 | 5 |
| 1-10 | 40.0 | 0 | 40.0 | 20.0 | 5 |
| 1-11 | 40.0 | 40.0 | 0 | 20.0 | 5 |
| 1-12 | 40.0 | 40.0 | 20.0 | 0 | 5 |
| 1-13 | 70.0 | 15.0 | 10.0 | 5 | 5 |
| 1-14 | 10.0 | 80.0 | 5.0 | 5 | 5 |
| 1-15 | 17.5 | 17.5 | 60.0 | 5 | 5 |
| 1-16 | 17.5 | 17.5 | 15.0 | 50.0 | 5 |

**Table 1 (continued)**

| No | Cement (Parts by mass) | Water-reducing agent (Parts by mass) | Flow change rate (%) | Compressive strength (N/mm²) | | Remarks |
|---|---|---|---|---|---|---|
| | | | | Immediately after demolding | 7 days | |
| 1-1 | 100 | 0.006 | 25.3 | 8.1 | 40.1 | Reference Example |
| 1-2 | 95 | 0.006 | 5.0 | 14.1 | 43.1 | Examples |
| 1-3 | 95 | 0.006 | 6.5 | 14.2 | 45.3 | Examples |
| 1-4 | 95 | 0.006 | 10.5 | 13.5 | 41.3 | Examples |
| 1-5 | 95 | 0.006 | 10.3 | 12.1 | 41.2 | Examples |
| 1-6 | 95 | 0.006 | 9.5 | 13.6 | 42.5 | Examples |
| 1-7 | 95 | 0.006 | 7.4 | 13.8 | 41.8 | Examples |
| 1-8 | 95 | 0.006 | 9.9 | 13.5 | 41.1 | Examples |
| 1-9 | 95 | 0.006 | 20.1 | 9.4 | 40.3 | Comparative Example |
| 1-10 | 95 | 0.006 | 24.5 | 9.3 | 40.2 | Comparative Example |
| 1-11 | 95 | 0.006 | 20.3 | 9.8 | 40.5 | Comparative Example |
| 1-12 | 95 | 0.006 | 16.5 | 9.6 | 40.1 | Comparative Example |
| 1-13 | 95 | 0.008 | 18.3 | 8.8 | 40.3 | Comparative Example |
| 1-14 | 95 | 0.006 | 10.5 | 10.2 | 40.0 | Comparative Example |
| 1-15 | 95 | 0.008 | 22.5 | 8.9 | 41.3 | Comparative Example |
| 1-16 | 95 | 0.008 | 23.1 | 9.0 | 40.5 | Comparative Example |

From the results shown in Table 1, it was confirmed that by using a hardening accelerator for hydraulic materials that contains calcium sulfoaluminate, organic acid calcium salts, inorganic calcium compounds, and inorganic sulfates excluding calcium sulfate in a predetermined ratio, the fluidity retention and initial strength development of the cement composition can be improved.

### <Experimental Example 2>

Mortar, cement composition and hardened body were prepared and the flow change rate and compressive strength were measured in the same manner as in Experimental Example 1, except that calcium acetate and calcium lactate were used in the ratio shown in Table 2 in addition to calcium formate as the organic acid calcium salt contained in the hardening accelerator for hydraulic materials. The results are shown in Table 2.

### (Organic acid calcium salt)

Calcium acetate: reagent.
Calcium lactate: reagent.

**Table 2**

| No. | Hardening accelerator for hydraulic materials | | | | | | |
|---|---|---|---|---|---|---|---|
| | Calcium sulfoaluminate (% by mass) | Organic acid calcium salt (% by mass) | | | Calcium sulfate (% by mass) | Sodium sulfate (% by mass) | Mixing amount (parts by mass) |
| | | Calcium formate | Calcium acetate | Calcium lactate | | | |
| 1-1 | 0 | 0 | 0 | 0 | 0 | 0 | 0 |
| 1-2 | 35.0 | 35.0 | 0 | 0 | 25.0 | 5.0 | 5 |
| 2-1 | 35.0 | 0 | 35.0 | 0 | 25.0 | 5.0 | 5 |
| 2-2 | 35.0 | 17.5 | 17.5 | 0 | 25.0 | 5.0 | 5 |
| 2-3 | 35.0 | 0 | 0 | 35.0 | 25.0 | 5.0 | 5 |
| 2-4 | 35.0 | 0 | 17.5 | 17.5 | 25.0 | 5.0 | 5 |

**Table 2 (continued)**

| No. | Cement (Parts by mass) | Water-reducing agent (Parts by mass) | Flow change rate (%) | Compressive strength (N/mm²) | | Remarks |
|---|---|---|---|---|---|---|
| | | | | Immediately after demolding | 7 days | |
| 1-1 | 100 | 0.006 | 25.3 | 8.1 | 40.1 | Reference Example |
| 1-2 | 95 | 0.006 | 5.0 | 14.1 | 43.1 | Examples |
| 2-1 | 95 | 0.006 | 3.5 | 11.1 | 40.2 | Examples |
| 2-2 | 95 | 0.006 | 4.0 | 13.1 | 42.4 | Examples |
| 2-3 | 95 | 0.006 | 4.5 | 11.0 | 41.1 | Examples |
| 2-4 | 95 | 0.006 | 4.9 | 12.9 | 42.8 | Examples |

From the results shown in Table 2, it was confirmed that by using formic acid calcium, calcium acetate, and calcium lactate as organic acid calcium salts contained in the hardening accelerator for hydraulic materials, the fluidity retention and initial strength development of the cement composition can be improved. In particular, it was confirmed that when calcium formate is contained, the initial strength development of the hardened body can be improved.

### <Experimental Example 3>

Mortar, cement composition and hardened body were prepared and the flow change rate and compressive strength were measured in the same manner as in Experimental Example 1, except that calcium hydroxide, calcium carbonate and calcium oxide were used in the ratio shown in Table 3 in addition to calcium sulfate as the inorganic calcium compound contained in the hardening accelerator for hydraulic materials. The results are shown in Table 3.

**Table 3**

| No. | Hardening accelerator for hydraulic materials | | | | | | | |
|---|---|---|---|---|---|---|---|---|
| | Calcium sulfoaluminate (% by mass) | Calcium formate (% by mass) | Inorganic calcium compound | | | | Sodium sulfate (% by mass) | Mixing amount (Parts by mass) |
| | | | Calcium sulfate | Calcium hydroxide | Calcium carbonate | Calcium oxide | | |
| 1-1 | 0 | 0 | 0 | 0 | 0 | 0 | 0 | 0 |
| 1-2 | 35.0 | 35.0 | 25.0 | 0 | 0 | 0 | 5.0 | 5 |
| 3-1 | 35.0 | 35.0 | 0 | 25.0 | 0 | 0 | 5.0 | 5 |
| 3-2 | 35.0 | 35.0 | 0 | 0 | 25.0 | 0 | 5.0 | 5 |
| 3-3 | 35.0 | 35.0 | 0 | 0 | 0 | 25.0 | 5.0 | 5 |

**Table 3 (continued)**

| No. | Cement mixing amount (Parts by mass) | Water-reducing agent (Parts by mass) | Flow change rate (%) | Compressive strength (N/mm²) | | Remarks |
|---|---|---|---|---|---|---|
| | | | | Immediately after demolding | 7 days | |
| 1-1 | 100 | 0.006 | 25.3 | 8.1 | 40.1 | Reference Example |
| 1-2 | 95 | 0.006 | 5.0 | 14.1 | 43.1 | Examples |
| 3-1 | 95 | 0.006 | 8.0 | 13.0 | 42.4 | Examples |
| 3-2 | 95 | 0.006 | 8.4 | 12.5 | 41.1 | Examples |
| 3-3 | 95 | 0.006 | 9.0 | 12.8 | 41.9 | Examples |

From the results shown in Table 3, it was confirmed that by using calcium sulfate, calcium hydroxide, calcium carbonate, and calcium oxide as inorganic calcium compound contained in the hardening accelerator for hydraulic materials, the fluidity retention and initial strength development of the cement composition can be improved. In particular, it was confirmed that when calcium sulfate is contained, the fluidity of the cement composition can be improved.

### (Inorganic calcium compound)

Calcium hydroxide: Reagent.
Calcium carbonate: reagent.
Calcium oxide: Reagent.

### <Experimental Example 4>

Mortar, cement composition and hardened body were prepared and the flow change rate and compressive strength were measured in the same manner as in Experimental Example 1, except that aluminum sulfate, potassium alum, and sodium thiosulfate were used in the ratio shown in Table 4 in addition to sodium sulfate as the inorganic sulfate contained in the hardening accelerator for hydraulic materials. The results are shown in Table 4.

### (Inorganic sulfate)

Aluminium sulfate: reagent.
Potassium alum: reagent.
Sodium thiosulfate: reagent.

**Table 4**

| No. | Hardening accelerator for hydraulic materials | | | | | | | |
|---|---|---|---|---|---|---|---|---|
| | Calcium sulfoaluminate (% by mass) | Calcium formate (% by mass) | Calcium sulfate (% by mass) | Inorganic sulfate (% by mass) | | | | Mixing amount (Parts by mass) |
| | | | | Sodium sulfate | Aluminum sulfate | Potassium alum | Sodium thiosulfate | |
| 1-1 | 0 | 0 | 0 | 0 | 0 | 0 | 0 | 0 |
| 1-2 | 35.0 | 35.0 | 25.0 | 5.0 | 0 | 0 | 0 | 5 |
| 4-1 | 35.0 | 35.0 | 10.0 | 20.0 | 0 | 0 | 0 | 5 |
| 4-2 | 35.0 | 35.0 | 10.0 | 0 | 20.0 | 0 | 0 | 5 |
| 4-3 | 35.0 | 35.0 | 10.0 | 0 | 0 | 20.0 | 0 | 5 |
| 4-4 | 35.0 | 350 | 10.0 | 0 | 0 | 0 | 20.0 | 5 |

**Table 4 (continued)**

| No. | Cement mixing amount (Parts by mass) | Water-reducing agent (Parts by mass) | Flow change rate (%) | Compressive strength (N/mm²) | | Remarks |
|---|---|---|---|---|---|---|
| | | | | Immediately after demolding | 7 days | |
| 1-1 | 100 | 0.006 | 25.3 | 8,1 | 40.1 | Reference Example |
| 1-2 | 95 | 0.006 | 5.0 | 14.1 | 43.1 | Examples |
| 4-1 | 95 | 0.006 | 10.8 | 14.5 | 41.5 | Examples |
| 4-2 | 95 | 0.006 | 11.2 | 14.8 | 45.0 | Examples |
| 4-3 | 95 | 0.006 | 10.5 | 13.6 | 42.1 | Examples |
| 4-4 | 95 | 0.006 | 9.5 | 13.7 | 40.5 | Examples |

From the results shown in Table 4, it was confirmed that by using sodium sulfate, aluminum sulfate, potassium alum, and sodium thiosulfate as inorganic sulfates contained in the hardening accelerator for hydraulic materials, the fluidity retention and initial strength development of the cement composition can be improved. In particular, it was confirmed that when sodium sulfate and aluminum sulfate are contained, the initial strength development can be improved, and particularly when sodium sulfate is contained, the fluidity retention can be further improved.

### <Experimental Example 5>

Mortar, cement composition, and hardened body were prepared in the same manner as in Experimental Example 1, except that the mixing amount of the hardening accelerator for hydraulic materials was set to the ratio shown in Table 5, and the flow change rate and compressive strength were measured. The results are shown in Table 5.

**Table 5**

| No. | Hardening accelerator for hydraulic materials | | | | |
|---|---|---|---|---|---|
| | Calcium sulfoaluminate (% by mass) | Calcium formate (% by mass) | Calcium sulfate (% by mass) | Sodium sulfate (% by mass) | Mixing amount (Parts by mass) |
| 1-1 | 0 | 0 | 0 | 0 | 0 |
| 1-2 | 35.0 | 35.0 | 25.0 | 5.0 | 5 |
| 5-1 | 35.0 | 35.0 | 25.0 | 5.0 | 2 |
| 5-2 | 35.0 | 35.0 | 25.0 | 5.0 | 8 |
| 5-3 | 35.0 | 35.0 | 25.0 | 5.0 | 0.03 |
| 5-4 | 35.0 | 35.0 | 25.0 | 5.0 | 20 |

**Table 5 (continued)**

| No. | Cement mixing amount (Parts by mass) | Water-reducing agent (Parts by mass) | Flow change rate (%) | Compressive strength (N/mm²) | | Remarks |
|---|---|---|---|---|---|---|
| | | | | Immediately after demolding | 7 days | |
| 1-1 | 100 | 0.006 | 25.3 | 8.1 | 40.1 | Reference Example |
| 1-2 | 95 | 0.006 | 5.0 | 14.1 | 43.1 | Examples |
| 5-1 | 98 | 0.006 | 15.3 | 12.8 | 41.5 | Examples |
| 5-2 | 92 | 0.006 | 4.0 | 16.1 | 46.3 | Examples |
| 5-3 | 99.97 | 0.006 | 20,4 | 9.2 | 40.0 | Examples |
| 5-4 | 80 | 0.003 | 6.0 | 95 | 40.1 | Examples |

From the results shown in Table 5, it was confirmed that by adjusting the mixing amount of the hardening accelerator for hydraulic materials within a predetermined range, the fluidity retention and initial strength development of the cement composition can be improved.

### <Experimental Example 6>

Mortar, cement composition, and hardened body were prepared and the flow change rate and compressive strength were measured in the same manner as in Experimental Example 1, except that blast furnace cement and fly ash cement were used as the cement for the cement composition. The results are shown in Table 6.

### (Cement)

Blast furnace type B cement: Commercially available product, Blaine value 3,200 cm²/g, specific gravity 3.15 g/cm³.
Blast furnace type C cement: Commercially available product, Blaine value 3,500 cm²/g, specific gravity 3.15 g/cm³.
Fly ash cement type B: Commercially available product, Blaine value 3,200 cm²/g, specific gravity 3.15 g/cm³.

**Table 6**

| No. | Hardening accelerator for hydraulic materials | | | | |
|---|---|---|---|---|---|
| | Calcium sulfoaluminate (% by mass) | Calcium formate (% by mass) | Calcium sulfate (% by mass) | Sodium sulfate (% by mass) | Mixing amount (Parts by mass) |
| 1-1 | 0 | 0 | 0 | 0 | 0 |
| 1-2 | 35.0 | 35.0 | 25.0 | 5.0 | 5 |
| 6-1 | 0 | 0 | 0 | 0 | 0 |
| 6-2 | 35.0 | 35.0 | 25.0 | 5.0 | 5 |
| 6-3 | 0 | 0 | 0 | 0 | 0 |
| 6-4 | 35.0 | 35.0 | 25.0 | 5.0 | 5 |
| 6-5 | 0 | 0 | 0 | 0 | 0 |
| 6-6 | 35.0 | 35.0 | 25.0 | 5.0 | 5 |

**Table 6 (continued)**

| No. | Cement (Parts by mass) | Cement type | Water-reducing agent (Parts by mass) | Flow change rate (%) | Compressive strength (N/mm²) | | Remarks |
|---|---|---|---|---|---|---|---|
| | | | | | Immediately after demolding | 7 days | |
| 1-1 | 100 | Ordinary portland cement | 0.006 | 25.3 | 8.1 | 40.1 | Reference Example |
| 1-2 | 95 | Ordinary portland cement | 0.006 | 5.0 | 14.1 | 43.1 | Examples |
| 6-1 | 100 | Blast furnace cement B type | 0.006 | 26.1 | 6.5 | 38.7 | Reference Example |
| 6-2 | 95 | Blast furnace cement B type | 0.006 | 8.5 | 10.5 | 40.1 | Examples |
| 6-3 | 100 | Blast furnace cement C type | 0.006 | 28.3 | 4.2 | 33.5 | Reference Example |
| 6-4 | 95 | Blast furnace cement C type | 0.006 | 9.3 | 8.9 | 34.1 | Examples |
| 6-5 | 100 | Fly ash cement B type | 0 006 | 27.5 | 4.1 | 28.4 | Reference Example |
| 6-6 | 95 | Fly ash cement B type | 0-006 | 8.9 | 7.3 | 31.3 | Examples |

From the results shown in Table 6, it was confirmed that even when blast furnace cement or fly ash cement is used as the cement for the cement composition, the fluidity retention and initial strength development of the cement composition can be improved.

### <Experimental Example 7>

In addition to the hardening accelerator for hydraulic materials having the same composition as No. 1-2 in Table 1 and the fine aggregate used in Experimental Example 1, coarse aggregate (river gravel from the Himekawa River system in Niigata Prefecture) was added as an aggregate, and blast furnace slag fine powder (commercially available product) was used to prepare a cement composition (concrete) by kneading to obtain the composition shown in Table 7, and the slump change was measured. Using the prepared cement composition, a hardened body of concrete with a diameter of ϕ10×20 cm were cured under the following conditions 1 or 2, and the compressive strength was measured. The results are shown in Table 7.

### (Measurement items)

Slump change : In accordance with the method specified in JIS R 1101:2020 "Method of Test for Slump of Concrete", the slump changes of concrete were measured immediately after kneading and 1 hour after kneading. The slump values immediately after kneading were all about 12.0 cm. Using each measured slump value, the slump change was calculated as (Slump change)=(Slump value immediately after kneading)/(slump value 1 hour after kneading).

Compressive Strength: Measured in accordance with the method specified in JIS A 1108:2018 "Method of Test for Compressive Strength of Concrete".

### (Condition 1)

The concrete was prepared by steam curing. As the steam curing conditions, pre-curing was performed at 20°C for 1 hour, followed by a temperature increase at a rate of 20°C per hour for 1.5 hours, a temperature maintaining 50°C for 3 hours, and then natural cooling for 0.5 hours.

### (Condition 2)

The concrete was prepared in an environment of 30 °C and held for 12 hours.

**Table 7**

| No. | Cement composition | | | | | |
|---|---|---|---|---|---|---|
| | Cement (kg/m³) | Aggregate | | Water (kg/m³) | Hardening accelerator for hydraulic materials (kg/m³) | Blast furnace slag fine powder (kg/m³) |
| | | Fine aggregate (kg/m³) | Coarse aggregate (kg/m³) | | | |
| 7-1 | 455 | 754 | 1019 | 150 | 0 | 0 |
| 7-2 | 432 | 750 | 1013 | 150 | 22.8 | 0 |
| 73 | 341 | 749 | 1012 | 150 | 0.0 | 114 |
| 7-4 | 324 | 753 | 1017 | 150 | 22.8 | 108 |
| 7-5 | 228 | 750 | 1013 | 150 | 0.0 | 228 |
| 7-6 | 216 | 746 | 1008 | 150 | 22.8 | 216 |
| 7-7 | 114 | 739 | 999 | 150 | 0.0 | 341 |
| 7-8 | 108 | 746 | 1008 | 150 | 22.8 | 324 |

**Table 7 (continued)**

| No. | Cement composition | | | | | Compression strength (N/mm²) | | Remarks |
|---|---|---|---|---|---|---|---|---|
| | W/C (%) | W/B (%) | s/a (%) | Air content (%) | Slump change (%) | Condition 1 | Condition 2 | |
| 7-1 | 32.97 | 32.97 | 43 | 3.8 | 7.5 | 12.8 | 16.4 | Reference Example |
| 7-2 | 34.7 | 34.7 | 43 | 4.0 | 4.0 | 21.4 | 28-2 | Examples |
| 73 | 43.96 | 32.97 | 43 | 3.9 | 8.5 | 9.5 | 12.1 | Reference Example |
| 7-4 | 46.27 | 34.7 | 43 | 3.4 | 4.5 | 18.0 | 23.1 | Examples |
| 7-5 | 65.93 | 32.97 | 43 | 3.5 | 10.0 | 7.3 | 9.1 | Reference Example |
| 7-6 | 69.4 | 34.7 | 43 | 3.7 | 6.0 | 16.1 | 19.5 | Examples |
| 7-7 | 131.9 | 32.97 | 43 | 4.1 | 12.5 | 4.8 | 6.3 | Reference Example |
| 7-8 | 138.8 | 34.7 | 43 | 3.4 | 8.0 | 12.8 | 16.8 | Examples |

| | | | | | | | | |
|---|---|---|---|---|---|---|---|---|
| *W/C=Water/Cement, W/B=Water/Binder | | | | | | | | |

From the results shown in Table 7, it was confirmed that even when the cement composition contains coarse aggregate and blast furnace slag fine powder, the fluidity retention and initial strength development can be improved.

From the above results, it was confirmed that the hardening accelerator for hydraulic materials of the present invention can improve the fluidity retention and initial strength development of the cement composition by containing calcium sulfoaluminate, organic acid calcium salt, inorganic calcium compound, and inorganic sulfate in a predetermined ratio.

### Industrial Applicability

The hardening accelerator for hydraulic materials of the present invention can improve the fluidity retention and initial strength development of the hydraulic material by containing calcium sulfoaluminate, an organic acid calcium salt, an inorganic calcium compound, and an inorganic sulfate other than calcium sulfate in a predetermined ratio. Therefore, it can be widely applied in civil engineering and construction fields, such as for concrete hardened bodies used in precast construction methods.

## Claims

1. A hardening accelerator for hydraulic materials comprising:
1 to 65 % by mass of calcium sulfoaluminate;
0.5 to 75 % by mass of organic acid calcium salt;
1 to 55 % by mass of inorganic calcium compound; and
0.5 to 45 % by mass of an inorganic sulfate excluding calcium sulfate.

2. The hardening accelerator for hydraulic materials according to claim 1,
wherein the inorganic calcium compound is one or more selected from the group consisting of calcium sulfate, calcium hydroxide, calcium carbonate and calcium oxide.

3. The hardening accelerator for hydraulic materials according to claim 1 or 2,
wherein the inorganic sulfate is one or more selected from the group consisting of sulfates, thiosulfates, sulfites, bisulfites, pyrosulfates, and pyrobisulfites.

4. A cement composition comprising:
the hardening accelerator for hydraulic materials according to claim 1 or 2; and
a cement.

5. The cement composition according to claim 4,
wherein a content of the hardening accelerator for hydraulic materials is 0.5 to 10 % by mass.

6. The cement composition according to claim 4, which is a concrete containing an aggregate.

7. A hardened body obtained by hardening the cement composition according to claim 4.

8. A hardened body obtained by hardening the cement composition according to claim 6.

9. A method for producing a hardened body comprising: hardening a cement composition containing the hardening accelerator for hydraulic materials according to claim 1, a cement and water, by steam curing at a maximum temperature of 40 to 80 °C for 2 to 8 hours.
